# EUROPEAN PATENT SPECIFICATION

(11) **EP 2 924 364 B1**
(45) Date of publication and mention of the grant of the patent: **07.09.2016**
(21) Application number: 15160379.2
(22) Date of filing: 23.03.2015
(51) Int. Cl.: F24J 2/30, F28D 7/00, F28D 7/10, F28D 15/00, F28F 1/10

(54) **SOLAR COLLECTOR WITH INTEGRATED STORAGE TANK**
SOLARKOLLEKTOR MIT INTERGRIERTEM SPEICHER
CAPTEUR SOLAIRE AVEC RÉSERVOIR DE STOCKAGE INTÉGRÉ

(30) Priority: 24.03.2014 IT RM20140150
(43) Date of publication of application: 30.09.2015
(73) Proprietor: Cordivari S.r.L., 64020 Morro d'Oro (TE) (IT)
(72) Inventor: Cordivari, Ercole, 64020 Morro D'Oro (TE) (IT)
(74) Representative: Santi, Filippo

(56) References cited:
- EP-A1- 2 369 261
- EP-A2- 0 095 135
- WO-A1-2013/182916
- CN-Y- 201 396 954
- FR-A1- 2 831 950
- GB-A- 2 161 917
- JP-A- 2014 016 057
- US-A- 4 299 203

## Description

The present invention relates to a solar collector wherein the storage tank of the secondary fluid to be heated is integrated in said solar collector.

More specifically, the invention relates to a solar collector of the mentioned type, having surface dimensions typical of a solar collector and a reduced thickness, with the storage tank contained within the solar collector, therefore, not visible and not hidden at the back of the collector, and, although it contains the whole system in its interior, extremely compact.

As it is known, a standard solar system provides an absorber, consisting of a plate of copper, or other thermally conductive material, with welded pipes, which captures solar energy and transfers it to the primary thermal carrier fluid, usually glycol, flowing in the tubes welded to it.

A secondary fluid (mainly water) is contained in a storage tank, provided with a heat exchanger, in which said primary fluid flows, which transfers the heat to the secondary fluid.

There are also natural circulation systems, whose principle of operation includes a primary thermovector fluid that circulates between an absorber and a storage tank, inside which the heat exchange takes place, without the aid of circulation means, such as pumps, but thanks to the natural tendency of hot fluid to rise.

This type of natural circulation systems, although characterized by positive characteristics, such as the operation without the need for other energy sources in addition to solar radiation, has a series of drawbacks, including the presence of a storage tank, external to the solar collector, with a strong aesthetic impact and non-compliance with environmental/ landscape constraints. Furthermore, the installer should mount both the collector and the tank on the structures and, in addition, he/she has to properly connect both the secondary circuit of the water and the primary circuit of the glycol, whose natural circulation takes place only if the circuit is realized correctly.

An advancement in the technology of the natural circulation collectors is constituted by the natural circulation collectors with a tank which is hidden in the rear of the collector.

This solution has a good compactness and ease of installation (it requires only the insertion of the secondary circuit, the primary one being integrated), but it is not free from defects, such as the possibility of installation only on flat horizontal surfaces (by means of structures which keep the collector in an inclined position), a poor aesthetic effect, and the possibility of a reverse circulation during the night, with consequent loss of heat.

A further known solution is constituted by the solar collectors with direct radiation, that do not include a primary fluid, as the stored sanitary water is exposed to direct sunlight.

This solution does not provide absorber, heat exchanger and transfer piping, so that its structure is simplified compared to the natural circulation solar systems described in the foregoing.

Also, the solar collectors with direct radiation can also be installed on pitched roofs, allowing a good aesthetics and a low impact on the landscape.

However, they are characterized by low yields, by a high heat loss due to direct exposure to the outside of the storage that, at least in part, is without insulation, as well as by the risk of breakage due to the formation of ice inside the storage itself. This is why they present an electric resistance connected to a thermostat which, at the fall of the external temperature, heats the water in order to prevent ice formation and rupture of the collector.

Still, the European patent application EP 2369261 A1 describes a solar collector box-like structure, having an absorber and a tank integrated in said box-like structure and arranged side by side. However, such a solar collector has the disadvantage of having a considerable bulk surface.

Another solar collector with integrated storage tank is described in WO 2013/182916 A1.

In light of the above, the Applicant has realized and developed an innovative solar system which allows to overcome the drawbacks of the technical solutions described in the foregoing.

In particular, according to the present invention a solar collector is proposed, which has the elements of the storage and expansion integrated within the solar collector, obtaining in this way an extremely compact structure.

Therefore, specific subject-matter of the present invention is a solar collector comprising a containment box-like structure, having a lower face, four perimeter faces and an upper face closed by an at least partially transparent surface, inside said box-like structure being housed: an upper absorber for exposure to solar radiation, arranged below said at least partially transparent surface, a primary circuit for accumulation and circulation of a primary thermovector fluid, at least a secondary conduit of accumulation and circulation of a secondary fluid, and at least a heat exchanger between said primary thermovector fluid and said secondary fluid, said at least a secondary conduit comprising at least one inlet opening and at least an outlet opening of said secondary fluid which are accessible externally to said box-like containment structure, said primary circuit comprising at least a first portion, thermally connected to said upper absorber and provided in its lower part, and at least a second portion thermally connected to said at least a secondary conduit in correspondence of said heat exchanger, said at least a second portion and said at least a secondary conduit being provided below said at least one first portion and between said at least a first portion of said primary circuit and said at least a secondary conduit at least one layer of insulating material being provided in such a way that, during use, when said primary thermovector fluid flows in said primary circuit, said primary thermovector fluid and said secondary fluid circulate in countercurrent in said heat exchanger, said at least a secondary conduit being configured so as to present at least a portion, having predominantly linear sections connected with each other two by two in series by means of union portions between said sections predominantly linear so as to form a coil duct, said at least a second portion of said primary circuit being configured in such a way to form a coil duct at least partially inserted in said at least a secondary conduit, so as to be in direct thermal contact with said secondary fluid, and in such a way to comprise a plurality of pairs of predominantly straight sections connected in series by means of first and second unions in such a way to form said coil duct and in that said first unions are external to said secondary conduit and in that said second unions are disposed inside said at least a secondary conduit.

Always according to the invention, said secondary conduit is a single conduit or pipe folded on itself so as to form a coil duct, on whose ends are formed respectively said inlet and output openings or in that said at least a secondary conduit comprises a plurality of storage ducts connected in series by means of first and second connections in such a way to form a coil duct.

More in particular, each pair of predominantly straight sections and the respective second union of said second portion, configured as coil duct, of said primary circuit passes through a respective predominantly straight portion of said secondary conduit.

Alternatively according to the invention, each pair of predominantly straight sections and the respective second union of said second portion, configured as coil duct, of said primary circuit crosses alternately a respective predominantly straight portion of said secondary conduit.

Still according to the invention, said predominantly straight sections of said second portion of said primary circuit are of increasing length in relation to the direction of circulation of the primary fluid in said second portion of said primary circuit.

Always according to the invention, said at least an insulating layer completely surrounds said secondary conduit so as to isolate it thermally.

Moreover, according to the invention, said absorber is in thermally conductive material, preferably copper or aluminum.

Preferably according to the invention, said primary circuit includes an expansion tank, directly connected to said primary circuit.

Further according to the invention, said primary circuit comprises a check valve which prevents said primary thermovector fluid to circulate in a direction opposite to the prevailing one.

In particular, according to the invention, said primary circuit is configured such that, during use, said primary thermovector fluid circulates by natural circulation.

Still according to the invention, said secondary conduit is configured such that, during use, said secondary fluid circulates by natural circulation.

Always according to the invention, said predominantly straight sections of said secondary conduit are connected with each other two by two in series by means of a pair of unions.

Further according to the invention, in at least a predominantly straight section of said secondary conduit a chamber is formed, inside which a plurality of elements in phase-change material is arranged, immersed in a third thermovector fluid, preferably a glycol solution.

Preferably according to the invention, in at least a predominantly straight section of said secondary conduit a plurality of elements in change material phase is arranged, in direct contact with said secondary fluid or inserted into one or more chambers which are able to float in said secondary fluid.

Finally, it is subject-matter of the present invention a system of solar collectors, characterized by comprising, connected in series and/or in parallel, a plurality of solar collectors according to any one of the preceding claims.

The present invention will now be described, by way of illustration but not by way of limitation, according to its preferred embodiment, with particular reference to the figures of the accompanying drawings, in which:
Figure 1 is a exploded perspective top view of the solar collector according to the invention according to a first embodiment in vertical configuration;
Figure 2 is an exploded perspective bottom view of the solar collector of Figure 1;
Figure 3 is a perspective top view of a further exploded view of the solar collector of Figure 1;
Figure 4 is a bottom perspective view of a further exploded view of the solar collector of Figure 1;
Figure 5 is an exploded top perspective view of the primary circuit of the solar collector of Figure 1;
Figure 6 is an exploded bottom perspective view of the primary circuit of Figure 5;
Figure 7 is a top view of the portion of the heat exchange of the solar collector of Figure 1;
Figure 8 is a top view of the portion of the heat exchange of the solar collector according to the invention according to the first embodiment in a horizontal configuration;
Figure 9 is a top view of the heat exchange portion of the solar collector according to the invention according to a second embodiment;
Figure 10 is a top view of the heat exchange portion of the solar collector according to the invention according to a third embodiment;
Figure 11 is a top view of the heat exchange portion of the solar collector according to the invention according to a fourth embodiment;
Figure 12 is a top view of the heat exchange portion of the solar collector according to the invention according to a fifth embodiment;
Figure 13 is a top view of the heat exchange portion of the solar collector according to the invention according to a sixth embodiment;
Figure 14 is a top view of the heat exchange portion of the solar collector according to the invention according to a seventh embodiment;
Figure 15 is a top view of the heat exchange portion of the solar collector according to the invention according to an eighth embodiment;
Figure 16 is a top view of the heat exchange portion of the solar collector according to the invention according to a ninth embodiment; and
Figure 17 is an exploded top perspective view of the solar collector according to the invention according to a tenth embodiment in vertical configuration.

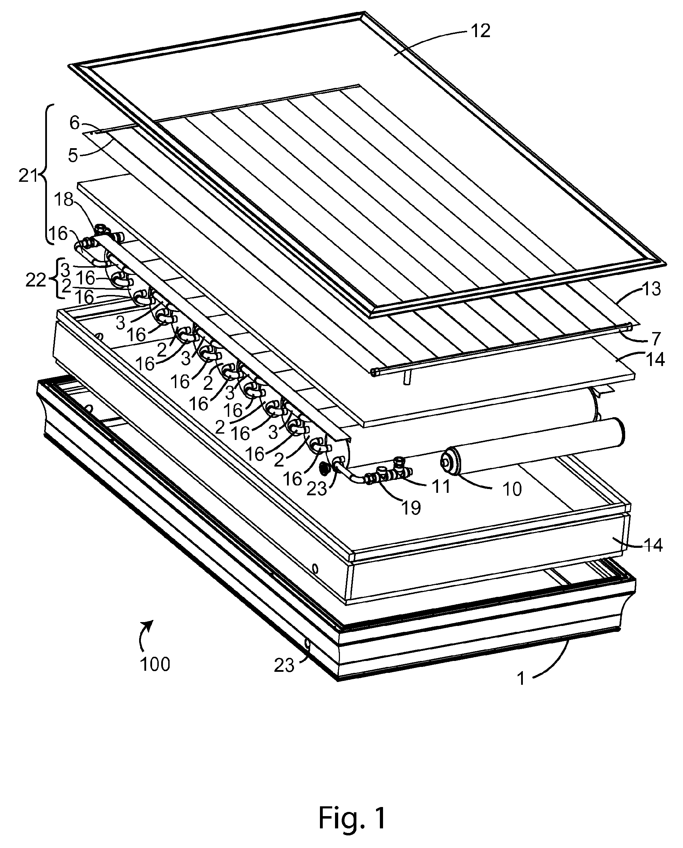

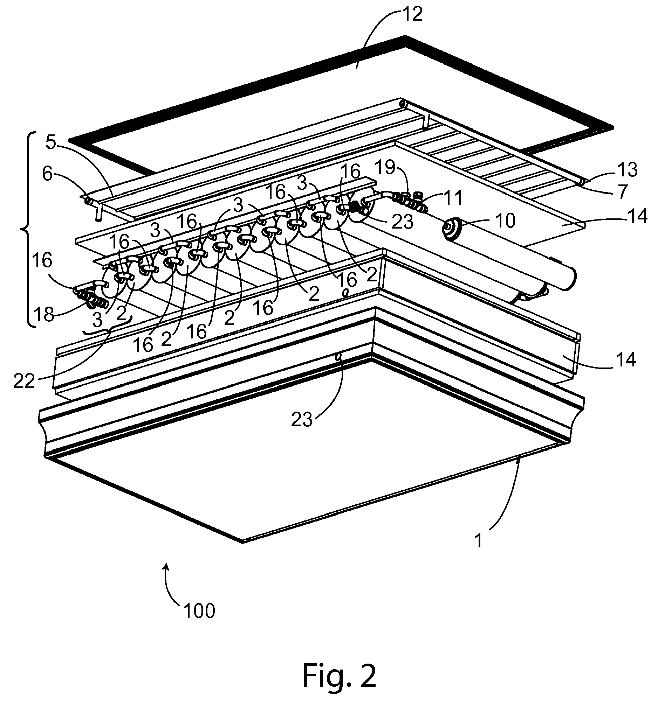

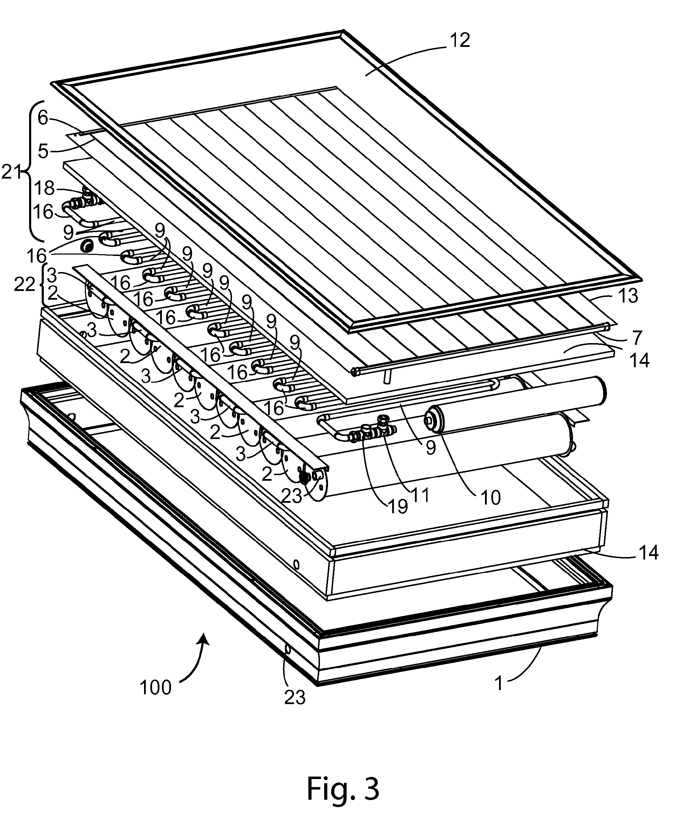

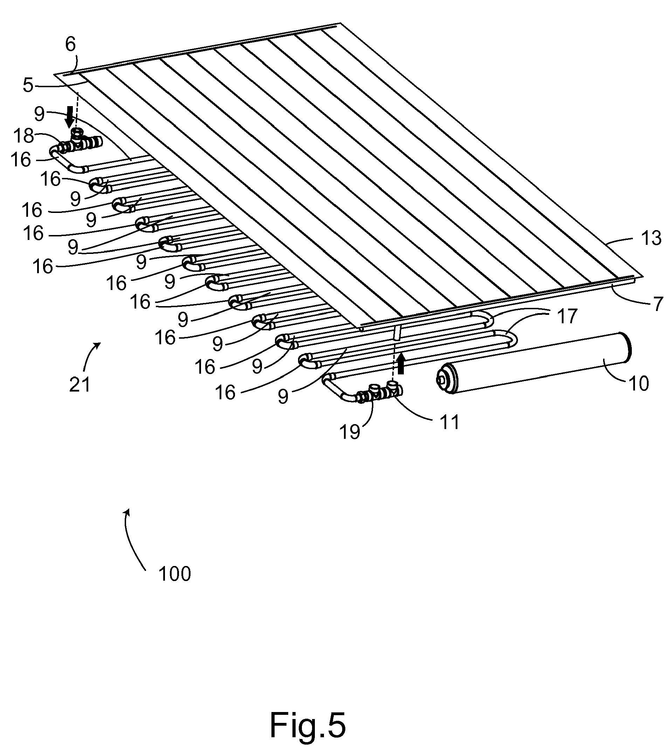

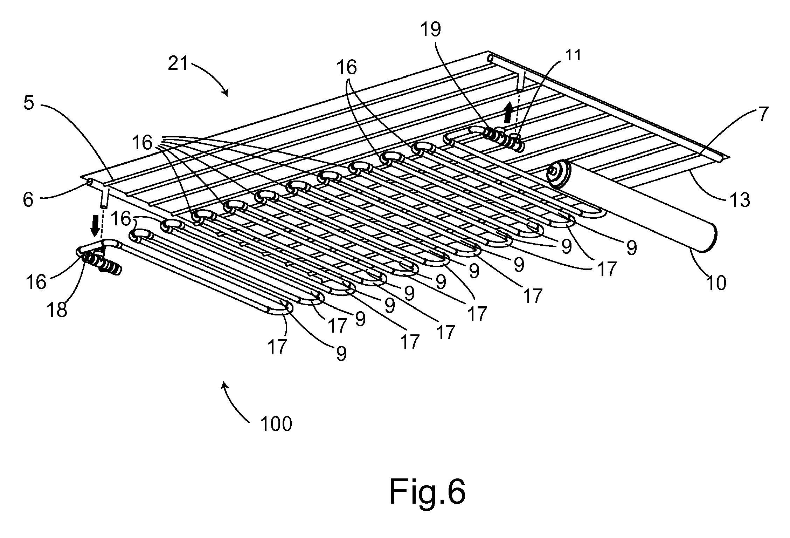

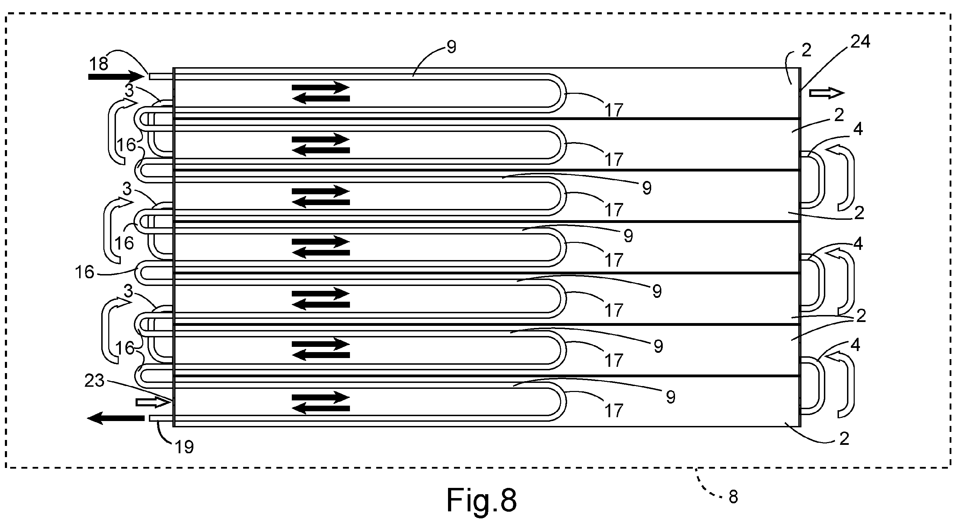

Referring to Figures 1-7 of the drawings, there is shown a first embodiment of the solar collector according to the invention, generally indicated by the reference number 100. The solar collector 100 may be implemented in the vertical configuration (figures 1-7 of the accompanying drawings) or horizontal (Figure 8 of the accompanying drawings), it may be connected in series or in parallel to other solar collectors 100, to realize a system of solar collectors 100.

Referring to the single solar collector 100 according to the first embodiment, it provides a containment structure 1, having a lower face, four perimeter faces and an open upper face, wherein the following elements are housed: an absorber 13, exposed to solar radiation, a first circuit or primary circulation system 21, for the flowing of a primary thermovector fluid, arranged below said absorber 13 and comprising a first portion 5, 6, 7, in thermal contact with said absorber 13 and a second portion 9, 16 , 17, a secondary duct or secondary circulation system 22, for the flowing of a secondary fluid, for example sanitary water, in thermal contact with said second portion 9, 16, 17 of said primary circuit 21 in correspondence of a portion 8 of the exchange between said thermal thermovector fluid and said secondary fluid, and a transparent or at least partially transparent surface 12, capable of couple to said containment element 1 on the top to tighten the solar collector 100 and at the same time allow the irradiation of the surface of absorption absorber 13.

In the present text, by transparent surface a surface is to be understood, which is transparent to the solar radiation. Moreover, throughout the present description, the term "absorber" refers to an element consisting of one or more absorbent surfaces, exposed to solar radiation or other heat source, made of thermally conductive material (preferably copper, aluminum or other material) connected to vessels (tubes, rooms or other) in which the fluid can flow, termed heat transfer medium, to which the heat absorbed by the absorber itself is transferred.

Said first portion 5, 6 and 7 of said primary circulation system 21 includes a plurality of first ducts 5, in particular pipes, and said second potion 9, 16 and 17 of said primary circulation system 21 includes a plurality of second conduits 9, in particular pipes, in fluid communication with said first ducts 5 for the flowing of said primary thermal carrier fluid. In particular, said plurality of first ducts 5 are in fluid connection with each other by means of a first collector or upper collector 6 and of a second collector or lower collector 7 (relative to the orientation of the collector 100), arranged to the respective ends of said first ducts 5.

Said plurality of second conduits 9 are in fluid connection in series with each other by means of first unions 16 and and second unions 17, arranged at the respective ends of said second conduits 9 in such a way as to form a pipe coil, in which the second ducts 9 coincide with the predominantly linear sections of the conduit coil and unions 16 and 17 coincide with the substantially "U"-shaped strokes of the pipe coil. Moreover, said second portion 9, 16, 17 of the primary circulation system 21 is provided below the first portion 5, 6, 7.

In the particular embodiment shown in the figures, each second duct 9 is parallel to the subsequent second conduit 9, in other embodiments said second conduits 9 can be tilted with respect to each other.

In further embodiments, said second conduits 9 and said unions 16 and 17 could be obtained with a single serpentine-shaped tube.

Said primary circulation system 21 also comprises a first connecting element 18, able to put in fluid communication said upper collectors 6 of said plurality of first ducts 5 and the upper portion of said second portion 9, 16, 17, and a second connecting element 19, able to put in fluid communication said lower collectors 7 of said plurality of first ducts 5 and the lower portion of said second portion 9, 16, 17.

Said secondary circulation system or secondary duct 22 comprises a plurality of storage ducts 2, in particular pipes, which are parallel with each other and are at the same time parallel to the lower collector 7 and 6 of the upper primary circuit 21 (in relation to the orientation of the solar collector 100) and in fluid communication with each other by means of respective unions 3 and 4 arranged so as to connect the respective ends of said storage ducts 2 two by two in series with each other, so as to form a single coil conduit, which has substantially linear sections coinciding with the storage ducts 2 and sections that are substantially "U"-shaped and coincident with said unions 3 and 4, wherein the secondary fluid can flow from the bottom to the top of the circulation system passing through the secondary circulation system 22 passing each time from the storage duct 2 located below to the storage duct 2 placed in series directly above the former. Said secondary conduit 22 is arranged below the first portion 5, 6, 7 of the primary duct 21.

In further, not shown embodiments, said storage ducts 2 may not necessarily be parallel to each other and parallel to the edge of said box-like structure 1 or parallel to the top solar collector 6 and bottom solar collector 7 of the primary circuit 21 without departing from the scope of protection of the present invention.

Moreover, also in further, not shown embodiments, said unions 3 and 4 are not necessarily "U"-shaped, being in any case connecting elements between said storage ducts 2.

At the free end of the lower storage duct 2, the inlet opening 23 of the secondary fluid is made, and at the free end of the conduit of the upper storage duct 2 the outlet opening 24 of the secondary fluid is made, which find themselves on two opposite sides of the solar collector 100 and being accessible externally to said box-like containment structure 1.

In further embodiments, the inlet opening 23 and outlet opening 24 may be on the same side or on both sides.

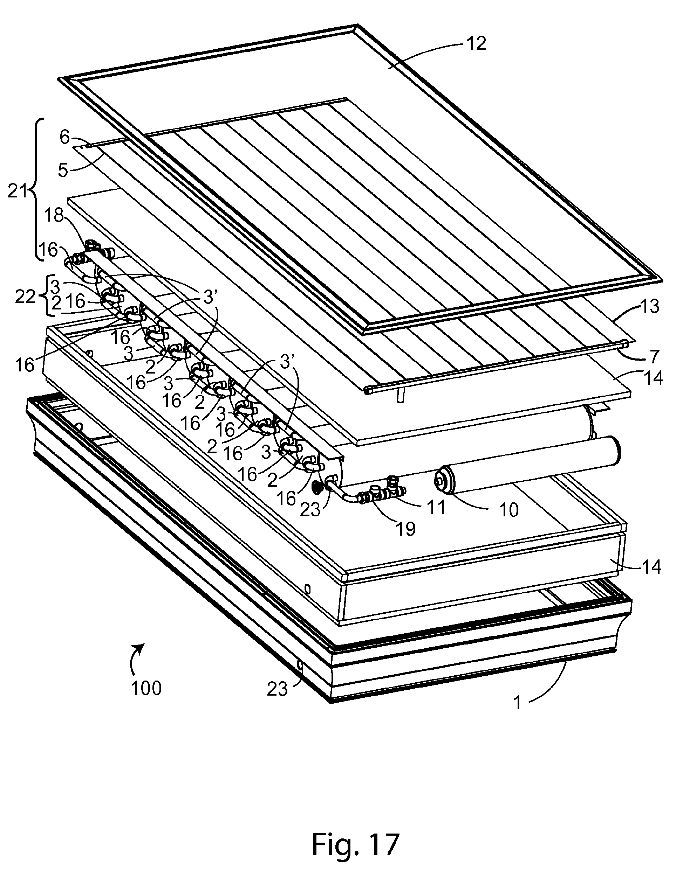

Referring to Figure 17, said storage ducts 2 can be connected with each other by means of a pair of unions 3, 3' and 4, 4' (not shown in the figure) for each side of the storage ducts 2, wherein a first connector 3, 4 is disposed in the lower side portion of two storage ducts 2 and a second connector 3', 4' is disposed in the upper side portion of two storage ducts 2. Wherein the first unions 3, 4 allow the complete emptying of the secondary fluid from the entire volume of the storage ducts in the discharge phase and the second unions 3', 4' allow the complete drainage of air during the filling phase of the storage ducts 2.

Said pairs of unions 3, 3' and 4, 4' can be connected to two storage ducts 2 in series.

As shown in particular in Figures 1 - 4, said plurality of first ducts 5 are arranged in thermal connection with the surface of said absorber 13, while said plurality of second conduits 9 are arranged in thermal connection with said secondary circuit 22 in the vicinity of a heat exchange portion 8.

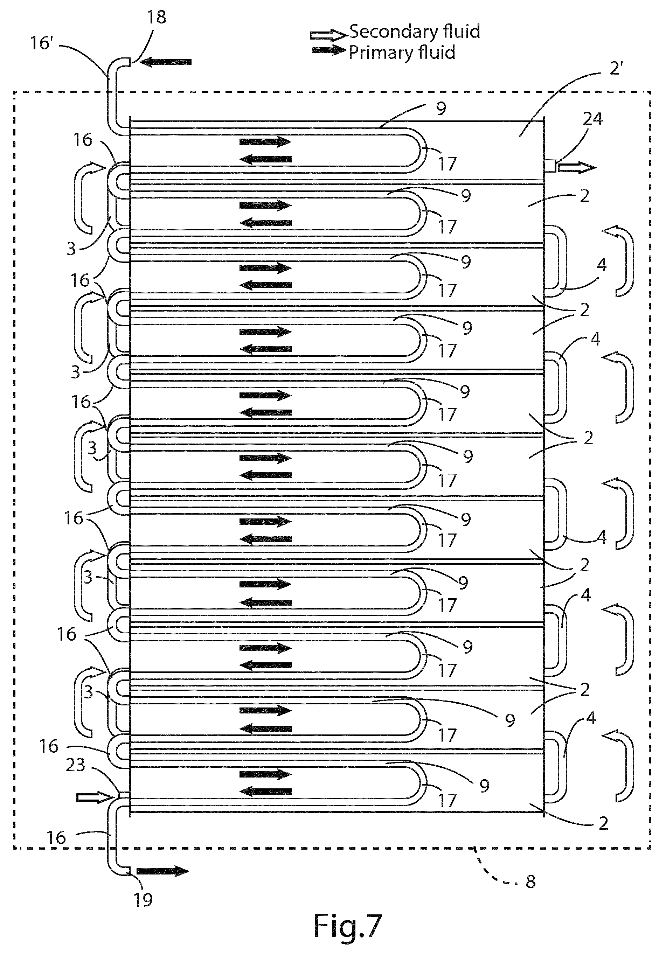

In particular in Figures 7 and 8, a top view of the heat exchange portion 8 is shown, with countercurrent circulation between the primary thermovector fluid and the secondary fluid, whose directions of movement are indicated (wherein the white arrows correspond to the secondary fluid and the black arrows correspond to the primary thermovector fluid) in the respective circuits 21 and 22 inside the solar collector 100 according to the invention.

In particular, said second conduits 9 in combination with the unions 16 and 17 of said primary circuit 21 are in fluid connection so as to form a single serpentine conduit and are immersed in said storage ducts 2 in pairs of second ducts 9 in such a way that the first unions 16 are external to said secondary duct 22 and said second unions 17 are arranged inside said secondary conduit 22, in such a way to have the inlet and the outlet of the primary fluid from the unions 18 and 19 disposed on the same side of the solar collector 100.

In the present embodiment, the second ducts 9 are of equal length, and are inserted in pairs of two second ducts 9 in each storage duct 2 of secondary conduit 22, while in further embodiments described below these second ducts 9 may be of different lengths with respect to each other and can be inserted partially in the secondary conduit 22.

The collector according to the invention thus proves to be lighter and easier to industrialize, owing to the fact that the assembly of the second ducts 9 in combination with the unions 16 and 17, entering and exiting from the same side, are easier to be produced and assembled.

The serpentine configuration of the second portion 9, 16, 17 of the primary circuit 21 can be also used in other embodiments of the solar collector 100 not according to the invention, in which the secondary conduit 22 has a configuration different from that described above, for example it is contained in a single tank in which the secondary fluid can flow or in which the plurality of storage ducts 2 are connected in series or in parallel so as to allow a free circulation of the secondary fluid.

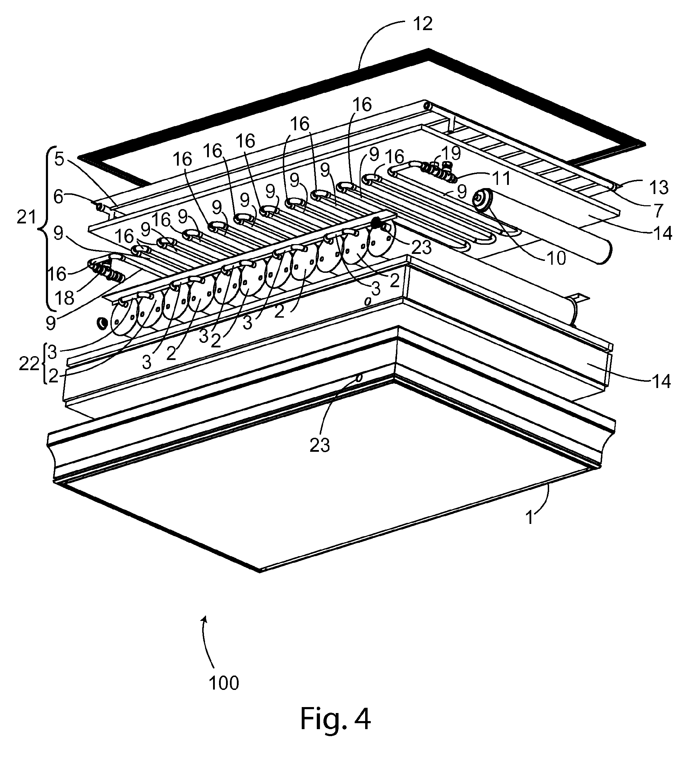

During use, the heat radiation absorbed by said absorber 13 is transmitted to said primary circulation system 21, resulting in the decrease in the density of the portion of the primary thermovector fluid contained in the first ducts 5 and the activation of the natural circulation of said primary thermovector fluid which, flowing in said first ducts 5 from bottom to top, is pushed in said second conduits 9 through said first union element 18 and said first upper union 16' flowing in countercurrent with respect to the flowing direction of the primary thermovector fluid in said first ducts 5, in particular from the top downwards (as shown in Figure 4), in succession in each second duct 9 and said unions 16 and 17 until it reaches the first lower union 16, and then said second union element 19 and again into said first ducts 5, through the lower collector 7.

In not shown embodiments, said primary thermovector fluid could be activated by means of a circulator or pump.

When said primary thermovector fluid flowing in said second conduits 9 immersed in said storage ducts 2 of said secondary circulation system 22, in correspondence of said heat exchange portion 8, the secondary fluid contained in said storage ducts 2 is heated up, possibly activating therein the natural circulation of the secondary fluid, which, for natural stratification, is pushed to flow in countercurrent with respect to the primary thermovector fluid flowing in the second ducts 9, in particular from the bottom to the top (as shown in Figure 7 or 8).

Thanks to the thermal stratification within the secondary circulation system 22, even if the secondary fluid is not fully heated up, it is possible to immediately remove the secondary fluid already heated from the storage ducts 2 via the outlet opening 24.

The solar collector 100 according to the invention operates preferably by means of natural circulation of the thermovector fluid in the primary circuit 21 adapted to activate, preferably, the natural circulation of the secondary fluid in the secondary conduit 22.

It is evident that the natural circulation of a fluid present in a circuit is activated when the circuit is tilted in such a way that in the portion most exposed to solar radiation, in the specific case the absorber, the fluid, by heating up, decreases in density and tends to rise, and in the portion not exposed to radiation, in the specific case the heat exchanger, the fluid, by cooling down, increases in density and tends to fall. This principle is the basis of the functioning of the solar collector according to the invention.

In the case of absence of solar radiation, for example during the night or in winter, when the temperature is lowered considerably, in order to prevent the activation of the inverse natural circulation of the primary thermovector fluid in the primary circuit 21, a check valve 11 has been provided in correspondence of said second union element 19, the chack valve being able to prevent the flow of the primary thermovector fluid in that direction, which could trigger a cooling cycle of the secondary fluid.

Moreover, just in order to isolate the second circuit 22 from the outside, a thermal insulation 14 has been provided, which is able to completely surround the secondary circulation system 22 from the absorber 13 and the first ducts 5 and the first portion 5, 6, 7 of the primary circulation system 21, limiting the thermal losses.

Should the user wish to withdraw hot water from the solar collector 100, being the extraction provided from the top of the secondary circulation circuit 22 of the secondary fluid from the exit aperture 24 (and the supply from the bottom through the inlet opening 23), even if all the water had not yet been heated up, the thermal stratification inside of the ducts 2 allows to immediately use the already heated water.

The expansion vessel 10 is provided in order to compensate for any changes in volume of the primary thermovector fluid (glycol or other suitable liquid).

The containment structure 1 of the solar collector 100 during use is arranged in a tilted position, in such a way as to facilitate irradiation of the upper portion of the collector 100 for activation of the natural circulation of the primary thermovector fluid inside said first circuit 21.

A specific advantage of this embodiment is to allow to obtain a good stratification of the hot water, or sanitary water, in particular in the storage ducts 2 arranged in the upper part of the solar collector 100, which, especially in winter, allows to have hot water in a short time.

Furthermore, the solar collector 100 thus formed is lighter than the solar collectors of the prior art and is easier to industrialize, given the simplicity of realization and retrieval of components.

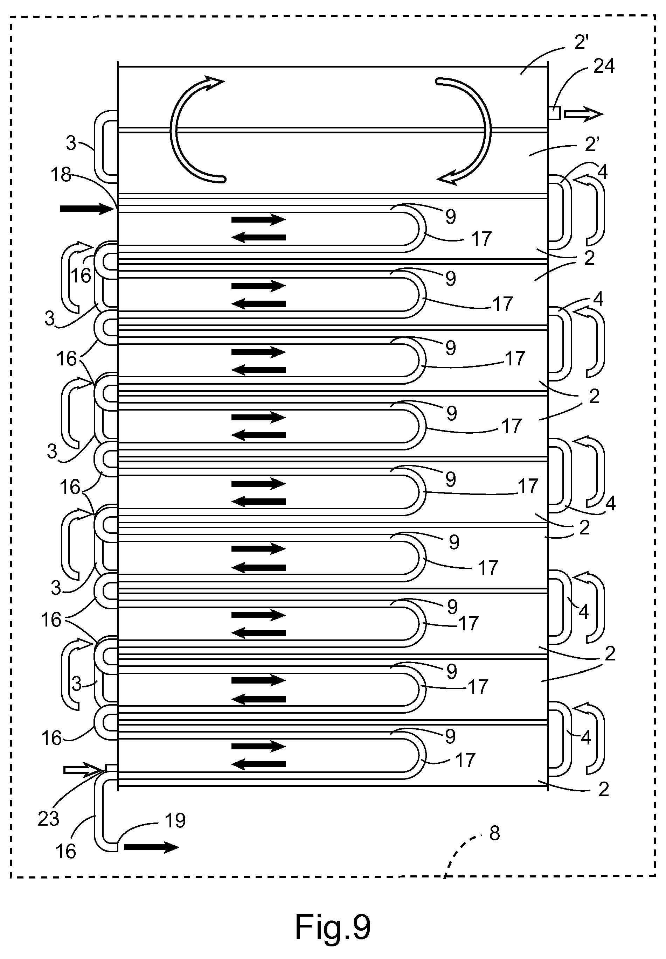

Referring to Figure 9 shows a portion of the solar collector 100 according to the invention according to a second embodiment.

The solar collector 100 shown in Figure 9 differs from that described above in that the secondary conduit 22 is traversed only partially from said coil-configured conduit 9, 16 and 17 of the primary circuit 21.

In fact, a group of upper ducts 2' between said storage ducts 2 are not crossed by said coil duct 9, 16, 17 of said primary circuit 21, reducing the area of heat exchange 8 between the primary circuit 21 and secondary conduit 22.

In the present embodiment, two storage ducts 2' of the secondary circuit 22 are not crossed by said second ducts 9 of said primary circuit 21, in other embodiments the number of the ducts can vary according to the necessity of thermal efficiency of the system.

The upper storage ducts 2' not crossed by the primary circuit 21 are still heated up for stratification of the secondary thermovector fluid, which is heated up, as described above, by the countercurrent movement of the primary thermovector fluid in the second ducts 9 by activating the natural circulation of the secondary fluid from the bottom to the top in said upper storage ducts 2' of the solar collector 100.

Said upper ducts 2 ' not crossed by the second portion 9, 16, 17 of the primary conduit 21 can be connected via unions 3, 4 from both sides, or may be a single element, so as to allow a free circulation of the secondary fluid in said upper portion of the secondary conduit 22.

The solar collector 100 according to the present embodiment has the advantage, compared to the previous embodiment, to increase the amount of secondary fluid heated or hot water, at disposal at an average temperature, for example 45° C.

Indeed, in the described above embodiment, for equal exposure to the sun, secondary fluid is accumulated, in particular water, at very hot temperature (for example about 75° C) on the top of the storage ducts 2, while in the just described embodiment the secondary fluid is accumulated at a lower temperature (e. g. 45° C), which is perceived by the user as hot, but in greater quantity. Moreover, this solution appears to be lighter and easier to be industrialized.

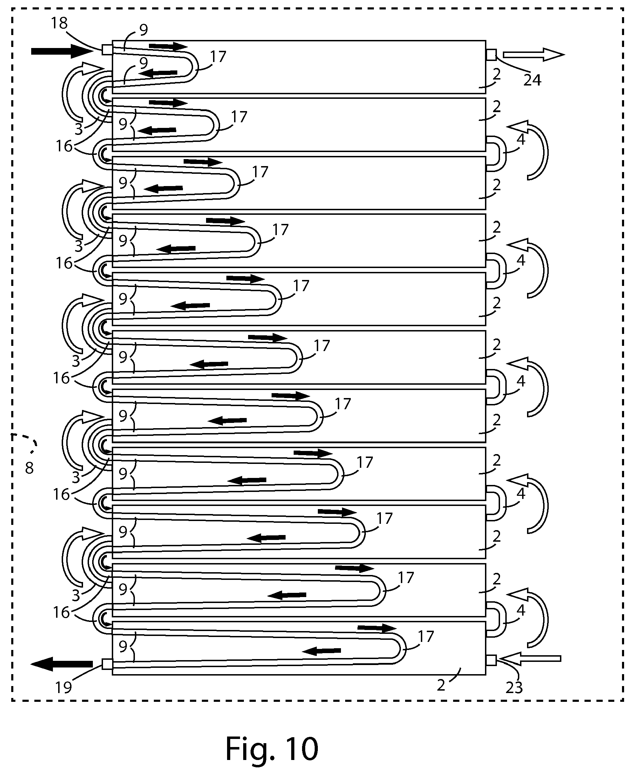

With reference to Figure 10, a third embodiment of the solar collector 100 according to the invention is shown, which differs with respect to the solar collector 100 according the previously described first embodiment in that said pipe coil 9, 16, 17 of said second portion of said primary conduit 21 is dimensioned so as to present the linear sections 9 of increasing length in relation to the direction of circulation of the thermovector fluid in said coil conduit 9, 16, 17 of said second portion of said primary duct 21, so as to allow advantageously modulating the heating of the individual storage ducts 2 of the secondary circuit 22 by varying the length of the second ducts 9 of the primary circuit so as to vary the area of heat exchange 8 and the thermal efficiency of the solar collector 100.

Since the primary fluid enters the second conduits 9 from the top at a higher temperature, the length of the second ducts 9 increases from the top downwards, so as to warm up more the lower storage ducts 2 and less the upper storage ducts 2, so as to have sufficient surface area and thus ensuring a larger appropriate thermal energy transfer, with decreasing temperature of the primary fluid (in the lower part of the second portion of the primary duct).

Therefore, an advantage of this embodiment of the solar collector according to the invention is to increase the amount of secondary fluid at average heat temperature, for example greater than 45° C.

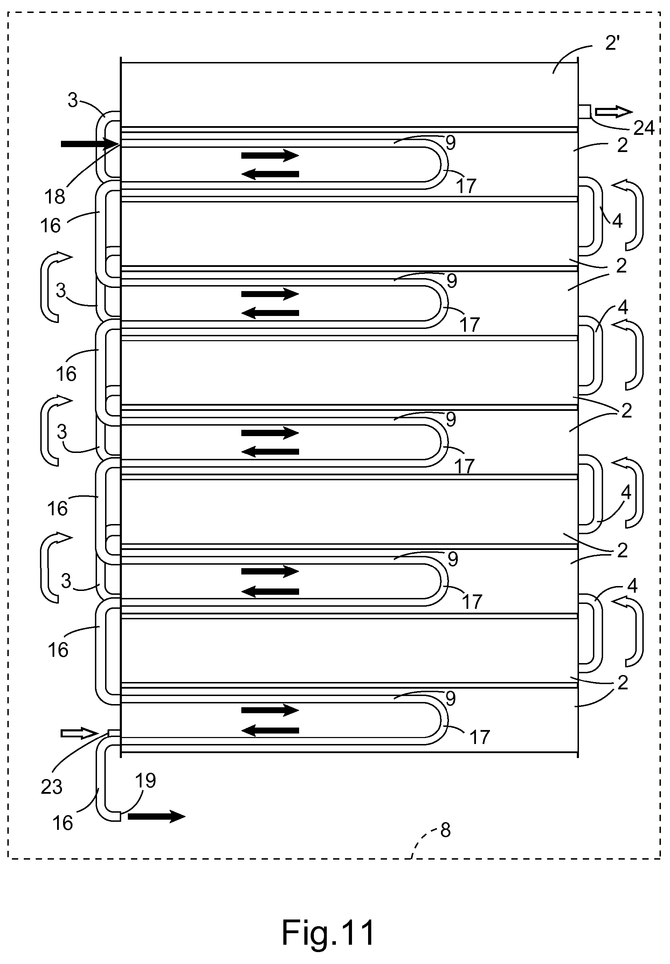

Observing now figure 11, a fourth embodiment of the solar collector 100 according to the invention is shown.

It differs from the embodiments described above, by the fact that the pairs of second ducts 9 of the second portion 9, 16, 17 of the primary circuit 21 enter and exit the storage ducts 2 of secondary conduit 22 in an alternating manner. In other words, they do not pass through all the contiguous storage ducts 2 of the secondary circuit 22, but pass through them in an alternating manner.

This advantageously allows uniform heating of domestic water or the secondary fluid into the storage ducts 2. The heating of the storage ducts 2 in which the second ducts 2 are not present, is ensured by the natural circulation that is established among the storage ducts 2.

Therefore the amount of hot water available at a temperature greater than 45° C increases, moreover the solar collector is lighter and easier to be industrialized.

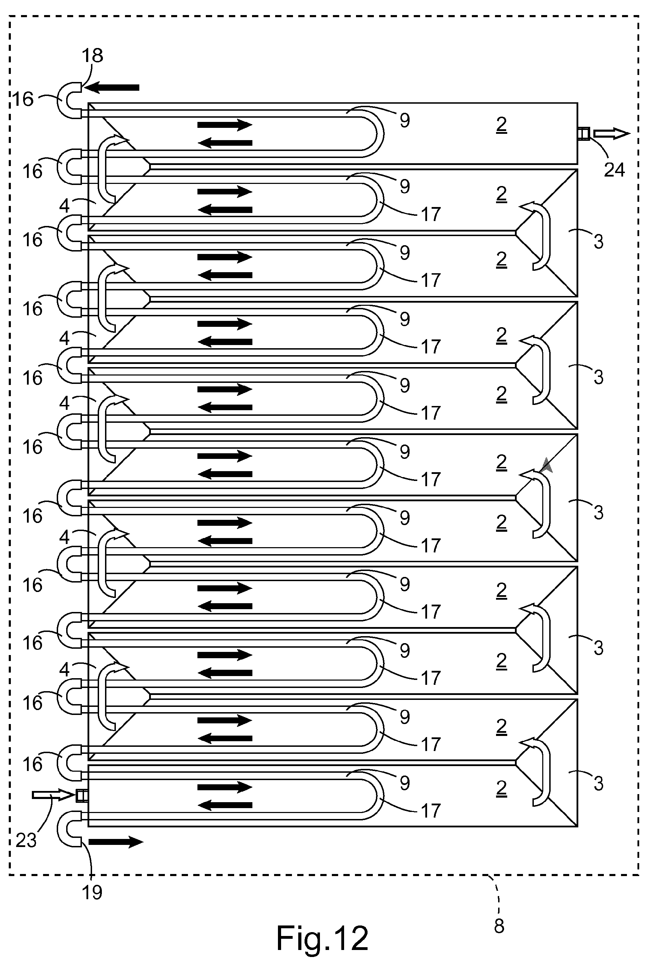

Still in figure 12. a fifth embodiment of the solar collector 100 according to the invention is shown.

It differs from the embodiments described previously in that said secondary conduit 22 comprises a single storage duct 2 folded several times to "S"-shape, so as to form a coil duct.

An advantage of this embodiment of the solar collector according to the invention is to be lighter and easier to industrialize.

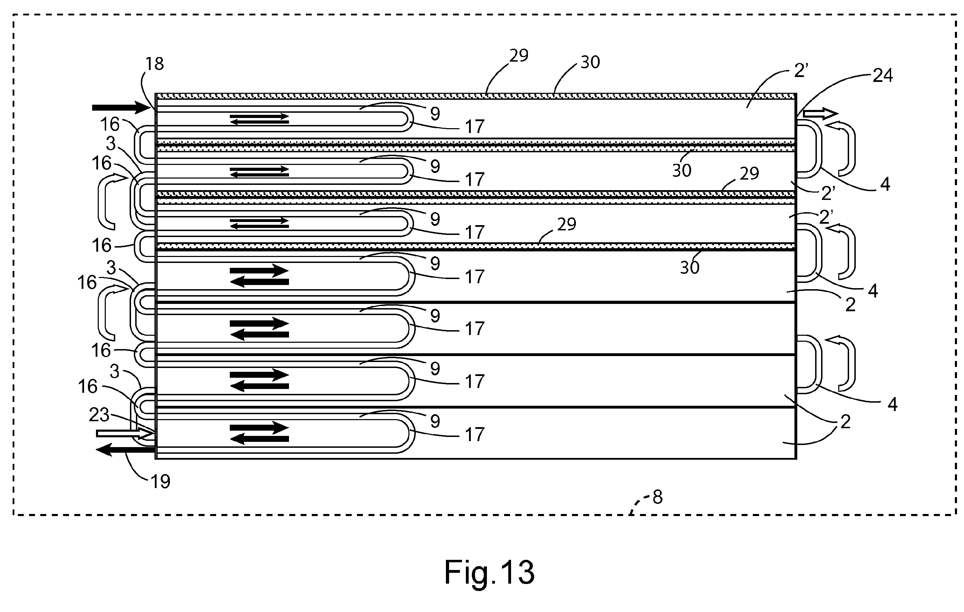

In Figure 13 there is shown a sixth embodiment of the solar collector 100 according to the invention.

The solar collector 100 differs from the previous embodiments, in that in the upper storage ducts 2', in particular in the first three ones, a chamber 29 is formed, which is separate from the upper storage ducts 2', within which a plurality of PCM 30 or phase-change material elements are arranged, in particular PCM gel spheres, which are immersed in a third thermovector fluid, in particular a glycol solution, to optimally utilize the sensible heat of the secondary fluid.

Said phase-change elements 30 are able to accumulate the heat released at the portion of the heat exchange 8 to the secondary fluid, in particular sanitary water, thanks to their ability to melt at a temperature very close to that of extraction of the sanitary water itself.

In this way, the PCM elements 30 are able to transform the sensible heat accumulated in the secondary fluid contained in the ducts of the upper storage ducts 2' in latent heat of fusion. At the time of removal of the secondary fluid, when the temperature of the secondary fluid accumulated in the upper storage ducts 2' starts to fall and approaches the melting temperature Tf of the elements PCM 30, the PCM elements 30 begin to release heat at a constant temperature until their complete solidification, by heating again the secondary fluid.

This allows to reduce the accumulation of excessive stratification of the upper storage ducts 2' and to conserve heat accumulated for a subsequent use.

It is also possible to reduce the size of the storage tank without affecting significantly the potential of the system in terms of provision of domestic water.

Preferably, the pairs of second conduits of the second portion of the primary circuit, arranged in the ducts of the upper accumulation, may be of shorter length with respect to the pairs of second conduits of the second portion of the primary circuit arranged in the remaining storage ducts.

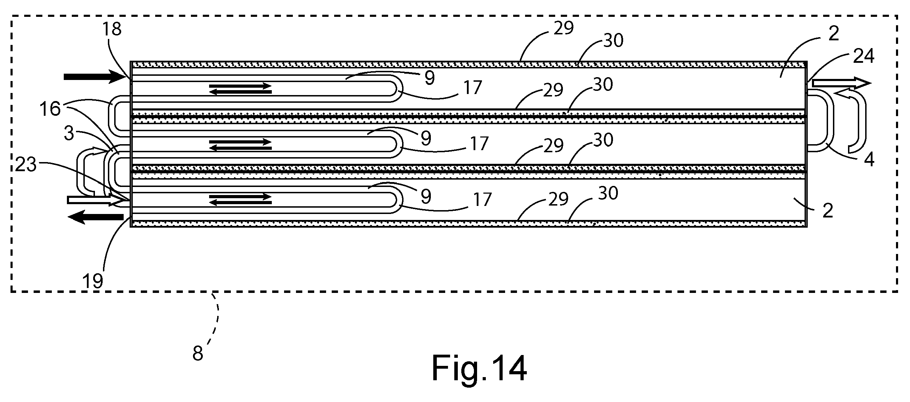

In figure 14 a seventh embodiment of the solar collector 100 according to the invention is shown, wherein, unlike the previous one, all the storage ducts 2, in the present third embodiment, are crossed by the second ducts 9 of the primary circuit 21 and have a separate chamber 29.

This embodiment, more compact than the previous one, allows to reduce the overall size of the secondary circuit 22 without affecting the performance significantly.

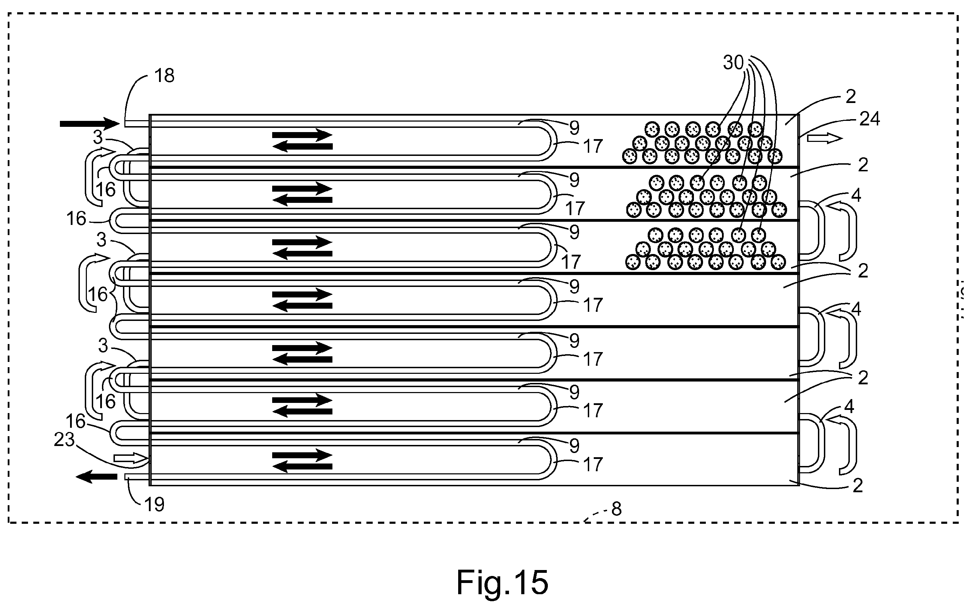

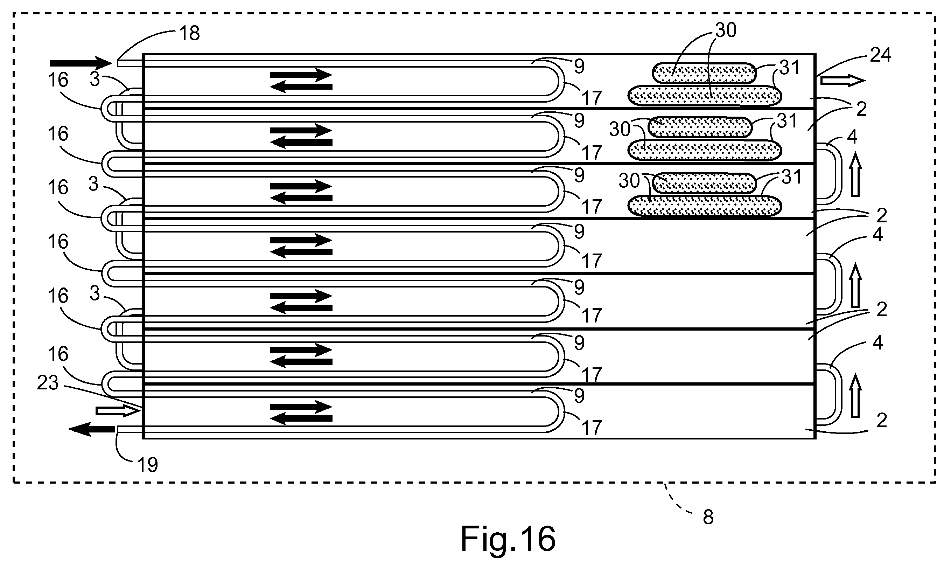

In further embodiments of the solar collector 100 according to the invention, the plurality of PCM 30, PCM spheres in particular, can be disposed in each storage duct 2 in direct contact with the secondary fluid (as shown in Figure 15) or inserted in one or more floating chambers 31 in the secondary fluid (as shown in Figure 16).

These further embodiments allow avoiding the complexities associated with the realization of a double-chamber inside the storage ducts of the secondary circuit.

By these solutions, a solar system is made, preferably with natural circulation, which is complete and integrated within the collector 100, with no tank at sight and compact, having surface dimensions typical of a solar collector and a reduced thickness.

Moreover, with the described solutions, it is possible to realize a system of a plurality of solar collectors, preferably natural circulation type, consisting of solar collectors 100, without tanks at sight and compact, having surface dimensions typical of only the solar collectors and a reduced thickness, because the system is completely modular, whereby the individual collectors 100 are connected in strings in series and in parallel and in both cases the layered heating of the liquid inside the storage is obtained.

Moreover, the system according to the invention allows the possibility of its installation on a sloping roof and recessed, respecting the constraints on the landscape, and in particular in consequence of the absence of the tank and in view of the possibility of embedding it.

The obtained product has also superior aesthetics with respect to the collectors with the tank mounted above the collector or hidden behind it.

The accumulation of the secondary fluid and the heat exchangers are completely surrounded by insulating material which limits the loss of heat to the outside, also the forecast of the check valve limits the risk of reverse circulation, preventing that, at low temperatures and in the absence of irradiation, the primary thermovector fluid contained in the cooling down absorber circles in the heat exchanger (or, when present, in the heat exchangers), subtracting heat to the accumulation of secondary fluid. Furthermore, the secondary fluid (water) is protected from the risk of ice formation without the necessity of any control system and heating (thermostat and resistor) and other energy sources.

Therefore, from an operating point of view, an efficiency higher than those of direct irradiation compact systems is obtained, by virtue of a limited heat dispersion (accumulation completely insulated and a minimum amount of fluid exposed to the outside) and a consequent risk of formation of ice minimized.

Furthermore, the solutions according to the invention can be installed simply, quickly and safely, being necessary only the connection of the secondary circuit, because the primary circuit is integrated, already filled and inclusive of expansion vessel.

In the solutions according to the invention, the heat exchange preferably occurs only in one or more storage vessels or possibly outside of the vessels themselves, whereas in the other storage vessels or tanks the natural stratification of the secondary fluid occurs.

The structure of the collector 100, according to the invention, gives the possibility to connect the tanks to form a series of tanks connected which mutually exchanging energy.

The stratification of the temperature of the secondary fluid accumulation on all tanks connected, which is achieved by the solution according to the present invention, causes the hot secondary fluid, stratified in the upper part of the set of all the tanks (from where the extraction is performed) is immediately usable, without having to heat the entire storage.

The insulation system is unique for both accumulation and for the absorber. The accumulation is fully insulated and heat dispersion limited, comparable to or smaller than that of the standard natural circulation solar systems.

Furthermore, in the particular embodiments described, the first portion 5 of the primary duct 21 extends for the entire upper surface of the absorber 13 in order to absorb a greater amount of solar radiation. In particular, preferably, the absorber 13 and the first portion 5 of the primary circuit 21 are welded together.

The present invention has been described according to its preferred embodiments, but it is to be understood that variations and/or modifications can be made by those skilled in the art without departing from the scope of protection as defined in the appended claims.

## Claims

1. Solar collector (100) comprising a containment box-like structure (1), having a lower face, four perimeter faces and an upper face closed by an at least partially transparent surface (12), inside said box-like structure (1) being housed: an upper absorber (13) for exposure to solar radiation, arranged below said at least partially transparent surface (12), a primary circuit (21) for accumulation and circulation of a primary thermovector fluid, at least a secondary conduit (22) of accumulation and circulation of a secondary fluid, and at least a heat exchanger (8) between said primary thermovector fluid and said secondary fluid, said at least a secondary conduit (22) comprising at least one inlet opening (23) and at least an outlet opening (24) of said secondary fluid which are accessible externally to said box-like containment structure (1), said primary circuit (21) comprising at least a first portion (5, 6, 7), thermally connected to said upper absorber (13) and provided in its lower part, and at least a second portion (9, 16, 17) thermally connected to said at least a secondary conduit (22) in correspondence of said heat exchanger (8), said at least a second portion (9, 16, 17) and said at least a secondary conduit (22) being provided below said at least one first portion (5, 6, 7) and between said at least a first portion (5, 6, 7) of said primary circuit (21) and said at least a secondary conduit (22) at least one layer of insulating material (14) being provided in such a way that, during use, when said primary thermovector fluid flows in said primary circuit (21), said primary thermovector fluid and said secondary fluid circulate in countercurrent in said heat exchanger (8), said at least a secondary conduit (22) being configured so as to present at least a portion, having predominantly linear sections (2) connected with each other two by two in series by means of union portions (3, 4, 3', 4') between said sections predominantly linear (2) so as to form a coil duct, said at least a second portion (9, 16, 17) of said primary circuit (21) being configured in such a way to comprise a plurality of pairs of predominantly straight sections (9) connected in series by means of first (16) and second (17) unions in such a way to form said coil duct
**characterised in that** said coil duct of said second portion (9, 16, 17) of said primary circuit (21) is at least partially inserted in said at least a secondary conduit (22), so as to be in direct thermal contact with said secondary fluid, and **in that** said first unions (16) are external to said secondary conduit (22) and **in that** said second unions (17) are disposed inside said at least a secondary conduit (22).

2. Solar collector (100) according to claim 1, **characterized in that** said secondary conduit (22) is a single conduit or pipe (2, 3, 4) folded on itself so as to form a coil duct, on whose ends are formed respectively said inlet (23) and output (24) openings or **in that** said at least a secondary conduit (22) comprises a plurality of storage ducts (2) connected in series by means of first and second connections (3 , 4, 3', 4') in such a way to form a coil duct.

3. Solar collector (100) according to any one of claims 1 or 2, **characterized in that** each pair of predominantly straight sections (9) and the respective second union (17) of said second portion (9, 16, 17), configured as coil duct, of said primary circuit (21) passes through a respective predominantly straight portion (2) of said secondary conduit (22).

4. Solar collector (100) according to any one of claims 1 or 2, **characterized in that** each pair of predominantly straight sections (9) and the respective second union (17) of said second portion (9, 16, 17), configured as coil duct, of said primary circuit (21) crosses alternately a respective predominantly straight portion (2) of said secondary conduit (22).

5. Solar collector (100) according to any claims 1 - 4, **characterized in that** said predominantly straight sections (9) of said second portion (9, 16, 17) of said primary circuit (21) are of increasing length in relation to the direction of circulation of the primary fluid in said second portion (9, 16, 17) of said primary circuit (21).

6. Solar collector (100) according to any one of the previous claims, **characterized in that** said at least an insulating layer (14) completely surrounds said secondary conduit (22) so as to isolate it thermally.

7. Solar collector (100) according to any one of the preceding claims, **characterized in that** said absorber (13) is in thermally conductive material, preferably copper or aluminum.

8. Solar collector (100) according to any one of the preceding claims, **characterized in that** said primary circuit (21) includes an expansion tank (10), directly connected to said primary circuit (21).

9. Solar collector (100) according to any one of the preceding claims, **characterized in that** said primary circuit (21) comprises a check valve (11) which prevents said primary thermovector fluid to circulate in a direction opposite to the prevailing one.

10. Solar collector (100) according to any one of the preceding claims, **characterized in that** said primary circuit (21) is configured such that, during use, said primary thermovector fluid circulates by natural circulation.

11. Solar collector (100) according to any one of the preceding claims, **characterized in that** said secondary conduit (22) is configured such that, during use, said secondary fluid circulates by natural circulation.

12. Solar collector (100) according to any one of the preceding claims, **characterized in that** in at least a predominantly straight section (2') of said secondary conduit (22) a chamber (29) is formed, inside which a plurality of elements (30) in phase-change material is arranged, immersed in a third thermovector fluid, preferably a glycol solution.

13. Solar collector (100) according to any one of the preceding claims 1 - 11, **characterized in that** in at least a predominantly straight section (2') of said secondary conduit (22) a plurality of elements (30) in change material phase is arranged, in direct contact with said secondary fluid or inserted into one or more chambers (31) which are able to float in said secondary fluid.

14. System of solar collectors (100), **characterized by** comprising, connected in series and/or in parallel, a plurality of solar collectors (100) according to any one of the preceding claims.

## Patentansprüche

1. Solarkollektor (100), der eine Hülle schachtelartigen Aufbaus (1) mit einer Unterseite, vier Umfangsseiten und einer von einer mindestens teilweise transparenten Fläche (12) geschlossenen Oberseite umfasst, wobei innerhalb des schachtelartigen Aufbaus (1) aufgenommen sind: ein oberer Absorber (13) für ein Aussetzen gegenüber Sonnenstrahlung, der unterhalb der wenigstens teilweise transparenten Fläche (12) angeordnet ist, eine Primärleitung (21) für eine Ansammlung und einen Umlauf eines Primär-Wärmeübertragungsfluides, wenigstens eine Sekundärleitung (22) für eine Ansammlung und einen Umlauf eines Sekundärfluides, und wenigstens einen Wärmeaustauscher (8) zwischen dem Primär-Wärmeübertragungsfluides und dem Sekundärfluid, wobei die wenigstes eine Sekundärleitung (22) wenigstens eine Einlassöffnung (23) und wenigstens eine Auslassöffnung (24) für das Sekundärfluid umfasst, die von außerhalb des schachtelartigen Hüllenaufbaus (1) zugänglich sind, wobei die Primärleitung (21) wenigstens einen ersten Abschnitt (5, 6, 7) umfasst, der thermisch mit dem oberen Absorber (13) verbunden und in seinem unteren Teil vorgesehen ist, und wenigstens einen zweiten Abschnitt (9, 16, 17), der thermisch mit der wenigstens einen Sekundärleitung (22) entsprechend dem Wärmeaustauscher (8) verbunden ist, wobei der wenigstens eine zweite Abschnitt (9, 16, 17) und die wenigstens eine Sekundärleitung (22) unterhalb des wenigstens einen ersten Abschnittes (5, 6, 7) und zwischen dem wenigstens einen ersten Abschnitt (5, 6, 7) der Primärleitung (21) und der wenigstens einen Sekundärleitung (22) vorgesehen sind,
wenigstens eine Schicht Isoliermaterials (14), das derart vorgesehen ist, dass im Betrieb, wenn das Primär-Wärmeübertragungsfluid in der Primärleitung (21) strömt, das Primär-Wärmeübertragungsfluid und das Sekundärfluid im Gegenstrom in dem Wärmeaustauscher (8) strömen, wobei die wenigstens eine Sekundärleitung (22) derart eingerichtet ist, dass sie wenigstens einen Abschnitt mit überwiegend linearen Bereichen (2) aufweist, die paarweise miteinander in Reihe mittels Verbindungsabschnitten (3, 4, 3', 4') zwischen den überwiegend linearen Bereichen (2) derart verbunden sind, dass sie ein Spiralleitungsrohr bilden, wobei der wenigstens eine zweite Abschnitt (9, 16, 17) der Primärleitung (21) derart eingerichtet ist, dass er eine Vielzahl von Paaren überwiegend gerader Bereiche (9), die mittels erster (16) und zweiter (17) Verbindungen derart in Reihe verbunden sind, dass sie das Spiralleitungsrohr bilden, **dadurch gekennzeichnet, dass** das Spiralleitungsrohr des zweiten Abschnittes (9, 16, 17) der Primärleitung (21) wenigstens teilweise in die wenigstens eine Sekundärleitung (22) eingeführt ist, um in direkten thermischen Kontakt mit dem Sekundärfluid zu sein, und dass die ersten Verbindungen (16) sich außerhalb der Sekundärleitung (22) befinden und dass die zweiten Verbindungen (17) innerhalb der wenigstens einen Sekundärleitung (22) angeordnet sind.

2. Solarkollektor (100) nach Anspruch 1, **dadurch gekennzeichnet, dass** die Sekundärleitung (22) eine einzelne Leitung oder ein einzelnes Rohr (2, 3, 4) ist, das in sich derart umgebogen ist, dass es ein Spiralleitungsrohr bildet, an dessen Enden jeweils die Einlass- (23) und Auslassöffnungen (24) gebildet sind, oder dadurch, dass die wenigstens eine Sekundärleitung (22) eine Vielzahl von Speicherrohren (2) umfasst, die mittels erster und zweiter Verbindungen (3, 4, 3', 4') derart in Reihe verbunden sind, dass sie ein Spiralleitungsrohr bilden.

3. Solarkollektor (100) nach einem der Ansprüche 1 oder 2, **dadurch gekennzeichnet, dass** sich jedes Paar überwiegend gerader Bereiche (9) und die jeweilige zweite Verbindung (17) des zweiten Abschnittes (9, 16, 17) der Primärleitung (21), als Spiralleitungsrohr ausgebildet, durch einen überwiegend geraden Abschnitt (2) der Sekundärleitung (22) hindurch erstreckt.

4. Solarkollektor (100) nach einem der Ansprüche 1 oder 2, **dadurch gekennzeichnet, dass** jedes Paar überwiegend gerader Bereiche (9) und die jeweilige zweite Verbindung (17) des zweiten Abschnittes (9, 6, 17) der Primärleitung (21), als Spiralleitungsrohr ausgebildet, alternierend einen jeweiligen überwiegend geraden Abschnitt (2) der Sekundärleitung (22) kreuzt.

5. Solarkollektor (100) nach einem der Ansprüche 1- 4, **dadurch gekennzeichnet, dass** die überwiegend geraden Bereiche (9) des zweiten Abschnittes (9, 16, 17) der Primärleitung (21) von sich vergrößernder Länge gegenüber der Strömungsrichtung des Primärfluides in dem zweiten Abschnitt (9, 16, 17) der Primärleitung (21) sind.

6. Solarkollektor (100) nach einem der vorhergehenden Ansprüche, **dadurch gekennzeichnet, dass** wenigstens eine Isolierschicht (14) die Sekundärleitung (22) vollständig umgibt, so dass diese thermisch isoliert ist.

7. Solarkollektor (100) nach einem der vorhergehenden Ansprüche, **dadurch gekennzeichnet, dass** der Absorber (13) aus einem thermisch leitenden Material, bevorzugt Kupfer oder Aluminium, ist.

8. Solarkollektor (100) nach einem der vorhergehenden Ansprüche, **dadurch gekennzeichnet, dass** die Primärleitung (21) ein direkt an die Primärleitung (21) angeschlossenes Ausdehnungsgefäß (10) aufweist.

9. Solarkollektor (100) nach einem der vorhergehenden Ansprüche, **dadurch gekennzeichnet, dass** die Primärleitung (21) ein Rückschlagventil (11) umfasst, das verhindert, dass das Primär-Wärmeübertragungsfluid in eine Richtung entgegen der vorherrschenden Richtung strömt.

10. Solarkollektor (100) nach einem der vorhergehenden Ansprüche, **dadurch gekennzeichnet, dass** die Primärleitung (21) derart ausgebildet ist, dass das Primär-Wärmeübertragungsfluid im Betrieb durch Naturumlauf strömt.

11. Solarkollektor (100) nach einem der vorhergehenden Ansprüche, **dadurch gekennzeichnet, dass** die Sekundärleitung (22) derart ausgebildet ist, dass das Sekundärfluid im Betrieb durch Naturumlauf strömt.

12. Solarkollektor (100) nach einem der vorhergehenden Ansprüche, **dadurch gekennzeichnet, dass** in dem wenigstens überwiegend geraden Bereich (2') der Sekundärleitung (22) eine Kammer (29) gebildet ist, innerhalb derer eine Vielzahl von Elementen (30) in einem Phasen-Wechselmaterial angeordnet sind, die in einem dritten Wärmeübertragungsfluid, vorzugsweise einer Glykollösung, eingetaucht sind.

13. Solarkollektor (100) nach einem der vorhergehenden Ansprüche 1 - 11, **dadurch gekennzeichnet, dass** in dem überwiegend geraden Bereich (2') der Sekundärleitung (22) eine Vielzahl von Elementen (30) in Phasen-Wechselmaterial angeordnet in direktem Kontakt mit dem Sekundärfluid oder in einer oder mehr Kammern (31) eingefügt sind, die in dem Sekundärfluid treiben können.

14. System von Solarkollektoren (100), **gekennzeichnet durch** ein Umfassen einer Vielzahl von Solarkollektoren (100) nach einem der vorhergehenden Ansprüche, die in Reihe und/oder parallel angeschlossen sind.

## Revendications

1. Capteur solaire(100) comprenant une structure de confinement en forme de caisse (1), ayant une face inférieure, quatre faces périmétriques et une face supérieure fermées par une surface au moins en partie transparente (12), en logeant dans ladite structure en forme de caisse (1) un absorbeur supérieur (13) pour exposition au rayonnement solaire, aménagé en dessous de ladite surface au moins en partie transparente (12), un circuit primaire (21) pour l'accumulation et la circulation d'un fluide thermovecteur primaire, au moins un conduit secondaire (22) pour l'accumulation et la circulation d'un fluide secondaire et au moins un échangeur de chaleur (8) entre ledit fluide thermovecteur primaire et ledit fluide secondaire, ledit au moins un conduit secondaire (22) comprenant au moins une ouverture d'entrée (23) et au moins une ouverture de sortie (24) dudit fluide secondaire qui sont accessibles à l'extérieur de ladite structure de confinement en caisse (1), ledit circuit primaire (21) comprenant au moins une première partie (5, 6, 7) raccordée au plan thermique audit absorbeur supérieur (13) et disposé dans sa partie inférieure, et au moins une seconde partie (9, 16, 17) raccordée au plan thermique audit au moins un conduit secondaire (22) en correspondance avec ledit échangeur de chaleur (8), ladite au moins une seconde partie (9, 16, 17) et ledit au moins un conduit secondaire (22) étant disposés en dessous de ladite au moins une première partie (5, 6, 7) et en aménageant entre ladite au moins une première partie (5, 6, 7) dudit circuit primaire (21) et ledit au moins un conduit secondaire (22) au moins une couche de matériau isolant (14) de sorte que, en cours d'utilisation, lorsque ledit fluide thermovecteur primaire s'écoule dans ledit circuit primaire (21), ledit fluide thermovecteur primaire et ledit fluide secondaire circulent à contre-courant dans ledit échangeur de chaleur (8), ledit au moins un conduit secondaire (22) étant configuré de manière à présenter au moins une partie ayant des sections principalement linéaires (2) raccordées l'une à l'autre deux par deux en série au moyen de parties de raccordement (3, 4, 3', 4') entre lesdites sections, principalement linéaires (2) de manière à former un conduit enroulé, ladite au moins une seconde partie (9, 16, 17) dudit circuit primaire (21) étant configurée de manière à comprendre une pluralité de paires de sections principalement droites (9) raccordées en série au moyen des premiers (16) et seconds (17) raccords de manière à former ledit conduit enroulé,
**caractérisé en ce que** ledit conduit enroulé de ladite seconde partie (9, 16, 17) dudit circuit primaire (21) est au moins en partie inséré dans ledit au moins un conduit secondaire (22) de manière à être en contact thermique direct avec ledit fluide secondaire et
lesdits premiers raccords (16) sont extérieurs audit conduit secondaire (22) et lesdits seconds raccords (17) sont disposés à l'intérieur dudit au moins un conduit secondaire (22).

2. Capteur solaire (100) selon la revendication 1, **caractérisé en ce que** ledit conduit secondaire (22) est un seul conduit ou tuyau (2, 3, 4) replié sur lui-même de manière à former un conduit enroulé aux extrémités duquel sont formées respectivement lesdites ouvertures d'entrée (23) et de sortie (24) ou ledit au moins un conduit secondaire (22) comprend une pluralité de conduits de stockage (2) raccordés en série au moyen de premiers et de seconds raccords (3, 4, 3', 4') de manière à former un conduit enroulé.

3. Capteur solaire (100) selon l'une quelconque des revendications 1 ou 2, **caractérisé en ce que** chaque paire de sections principalement droites (9) et le second raccord respectif (17) de ladite seconde partie (9, 16, 17), configurée en conduit enroulé, dudit circuit primaire (21) passe à travers une section principalement droite respective (2) dudit conduit secondaire (22).

4. Capteur solaire (100) selon l'une quelconque des revendications 1 ou 2, **caractérisé en ce que** chaque paire de sections principalement droites (9) et le second raccord respectif (17) de ladite seconde partie (9, 16, 17), configurée en conduit enroulé, dudit circuit primaire (21) croisent en alternance une partie principalement droite respective (2) dudit conduit secondaire (22).

5. Capteur solaire (100) selon l'une quelconque des revendications 1 à 4, **caractérisé en ce que** lesdites sections principalement droites (9) de ladite seconde partie (9, 16, 17) dudit circuit primaire (21) ont une longueur croissante par rapport au sens de circulation du fluide primaire dans ladite seconde partie (9, 16, 17) dudit circuit primaire (21).

6. Capteur solaire (100) selon l'une quelconque des revendications précédentes, **caractérisé en ce que** ladite au moins une couche isolante (14) entoure complètement ledit conduit secondaire (22) de manière à l'isoler au plan thermique.

7. Capteur solaire (100) selon l'une quelconque des revendications précédentes, **caractérisé en ce que** ledit absorbeur (13) est formé d'un matériau thermoconducteur, de préférence du cuivre ou de l'aluminium.

8. Capteur solaire (100) selon l'une quelconque des revendications précédentes, **caractérisé en ce que** ledit circuit primaire (21) comprend un réservoir d'expansion (10) directement raccordé audit circuit primaire (21).

9. Capteur solaire (100) selon l'une quelconque des revendications précédentes, **caractérisé en ce que** ledit circuit primaire (21) comprend une soupape de non retour (11) qui empêche ledit fluide thermovecteur primaire de circuler dans un sens opposé à celui qui prévaut.

10. Capteur solaire (100) selon l'une quelconque des revendications précédentes, **caractérisé en ce que** ledit circuit primaire (21) est configuré de sorte que, en cours d'utilisation, ledit fluide thermovecteur primaire circule par circulation naturelle.

11. Capteur solaire (100) selon l'une quelconque des revendications précédentes, **caractérisé en ce que** ledit conduit secondaire (22) est configuré de sorte que, en cours d'utilisation, ledit fluide secondaire circule par circulation naturelle.

12. Capteur solaire (100) selon l'une quelconque des revendications précédentes, **caractérisé en ce qu'**il est formé dans au moins une section principalement droite (2') dudit conduit secondaire (22) une chambre (29) à l'intérieur de laquelle une pluralité d'éléments (30) d'un matériau de changement de phase sont aménagés, immergés dans un troisième fluide thermovecteur, de préférence une solution de glycol.

13. Capteur solaire (100) selon l'une quelconque des revendications 1 à 11, **caractérisé en ce que**, dans au moins une section principalement droite (2') dudit conduit secondaire (22), sont aménagés une pluralité d'éléments (30) en matériau de changement de phase, en contact direct avec ledit fluide secondaire ou insérés dans une ou plusieurs chambres (31) qui est ou sont à même de flotter dans ledit fluide secondaire.

14. Système de capteurs solaires (100), **caractérisé en ce qu'**il comprend, raccordés en série et/ou en parallèle, une pluralité de capteurs solaires (100) selon l'une quelconque des revendications précédentes.
